# EUROPEAN PATENT SPECIFICATION

(11) **EP 0 568 626 B1**
(45) Date of publication and mention of the grant of the patent: **28.05.1997**
(21) Application number: 92904915.3
(22) Date of filing: 21.01.1992
(51) Int. Cl.: C08L 101/00, C08L 23/12

(54) **ANTISTATIC THERMOPLASTIC COMPOSITIONS**
ANTISTATISCHE THERMOPLASTISCHE ZUSAMMENSETZUNGEN
COMPOSITIONS THERMOPLASTIQUES ANTISTATIQUES

(30) Priority: 22.01.1991 US 643956
(43) Date of publication of application: 10.11.1993
(73) Proprietor: KAWASAKI LNP INC., Exton,PA 19341 (US)
(72) Inventor: BOLVARI, Anne, West Chester, PA 19382 (US); WARD, Susan, K., Newark, Ohio, 43055 (US)
(74) Representative: Grünecker, Kinkeldey, Stockmair & Schwanhäusser Anwaltssozietät
(86) International application number: US9200503
(87) International publication number: WO9213036

(56) References cited:
- EP-A- 0 257 592
- CHEMICAL PATENTS INDEX, BASIC ABSTRACTS JOURNAL Section Ch, Week 9023, 1 August 1990 Derwent Publications Ltd., London, GB; Class A, AN 175330 & JP-A-2 115 273
- CHEMICAL PATENTS INDEX, BASIC ABSTRACTS JOURNAL Section Ch, Week 9043, 19 December 1990 Derwent Publications Ltd., London, GB; Class A, AN 323730 & JP-A-2 229 862
- CHEMICAL PATENTS INDEX, BASIC ABSTRACTS JOURNAL Section Ch, Week 8904, 22 March 1989 Derwent Publications Ltd., London, GB; Class A, AN 29220 & JP-A-3 304 060
- JAPANESE PATENTS GAZETTE Section Ch, Week K04, 9 March 1983 Derwent Publications Ltd., London, GB; Class A, Page 4, AN 8512 & JP-A-57 202 338

## Description

The present invention relates to filled and unfilled thermoplastic compositions which exhibit antistatic properties. More particularly, the present invention relates to filled and unfilled antistatic thermoplastic compositions with sustained ability to protect against electrostatic discharge damage.

Antistatic plastics having a resistivity of about 10⁸ to about 10¹² ohm/sq. surface resistivity are widely used in materials for protecting electronic components from electrostatic discharge (ESD) damage. Carbon black is the most common antistatic filler used in thermoplastic compositions. However, this resistivity range is generally difficult to achieve consistently in conductive composites due to the percolation threshold of carbon-filled thermoplastics. In addition, the carbon black in carbon-filled thermoplastics imparts a dark or black color. Accordingly, a desirable color is generally unachievable with carbon black filled materials. For these reasons, a non-carbon containing antistatic material is needed.

Traditional antistatic plastics contain long chain hygroscopic agents or surfactants incorporated in the resin formulation during extrusion. The surfactants form a thin layer (referred to as "surface bloom") on the surface of the plastic and are continuously replenished by reserves within the bulk plastic. While on the surface, hygroscopic polar groups of the surfactants attract atmospheric water and create a thin electrically conducting surface for reduced generation and dissipation of static charges. The generally low concentration of the surfactants and their inability to be chemically bound to the bulk plastic affect the plastic's ability to sustain antistatic properties in various storage and use environments. In addition, the surface bloom tends to form a haze on the surface of the plastics, which affects the appearance of the plastic materials.

Hygroscopic surfactants generally include tertiary amines and their ammonium salts, glycerides and sulfonamides. Advantages of these surfactants include their low cost and low use levels. However, the main disadvantages of these surfactants are their humidity dependence, i.e. the hygroscopic nature of the surfactants, and loss of effectiveness due to wear and use of the plastic materials.

US-A-4,618,648, 4,675,360 and 4,708,999 disclose modified polyvinyl alcohol compositions having good gas barrier properties comprising a copolymer of vinyl alcohol, vinyl acetate and a poly(alkyleneoxy)acrylate comonomer. The copolymer is prepared by polymerizing the vinyl acetate and poly(alkyleneoxy)acrylate monomer to yield a copolymer. The acetate functionality of the copolymer is then hydrolyzed to form a vinyl alcohol copolymer.

US-A-4,588,773 and 4,775,716 disclose antistatic thermoplastic compositions comprising an ABS graft copolymer and an epihalohydrin copolymer. The ABS graft copolymer comprises a vinyl aromatic compound and an acrylonitrile compound. The epihalohydrin copolymer is a copolymer of epichlorohydrin and an alkylene oxide, for example, ethylene oxide, propylene oxide and mixtures thereof.

US-A-4,719,263 discloses plastic materials, such as thermoplastics and thermosets, containing an effective amount of an epihalohydrin-containing polymer as an antistatic agent. Several thermoplastic materials are disclosed, including polymers of acrylonitrile, butadiene, and styrene, polyamides or nylons, polyesters, polyvinylchloride, chlorinated polyinylchloride, and polycarbonates.

According to the present invention, antistatic thermoplastic compositions are provided comprising 5 to 50 wt% of a polyvinyl alcohol copolymer and 50 to 95 wt% of a thermoplastic polymer, wherein said copolymer is a copolymer of vinyl acetate and poly(alkyleneoxy)acrylate wherein the acetate functionality is at least partially hydrolyzed to a vinyl alcohol functionality and said thermoplastic polymer is a polymer other than said copolymer.

According to the present invention a method of improving the antistatic properties of a thermoplastic polymer is provided comprising adding to the polymer 5 to 50 wt% of a polyvinyl alcohol copolymer, wherein said copolymer is a copolymer of vinyl acetate and poly(alkyleneoxy)acrylate wherein the acetate functionality is at least partially hydrolyzed to a vinyl alcohol functionality and said thermoplastic polymer is a polymer other than said copolymer, wherein the wt% are based on a total weight of a final mixture including said polymer and said copolymer.

Particularly preferred polyvinyl alcohol copolymers used in the antistatic thermoplastic compositions of the invention include those having the formula: 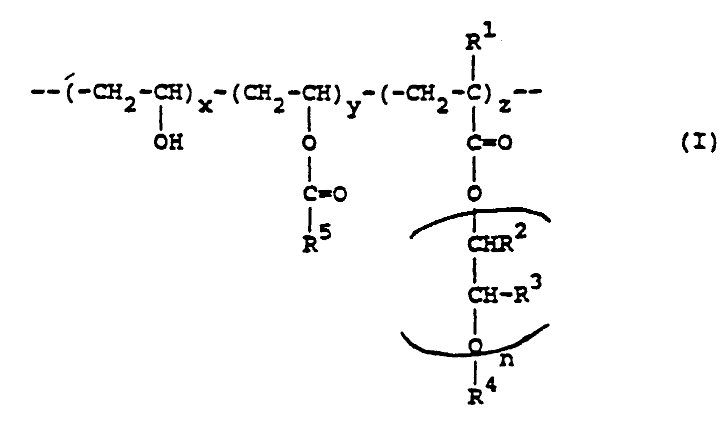 wherein
R¹ is hydrogen, methyl or ethyl;
R² and R³ are independently hydrogen, alkyl of 1 to 20 carbons, or aryl of 6 to 20 carbons;
R⁴ and R⁵ are independently hydrogen, alkyl of 1 to 20 carbons, aryl of 6 to 20 carbons, or aralkyl of 7 to 30 carbons;
n is 1 to 1000;
x is 50 to 99.9 mole percent;
y is 0 to 50 mole percent; and
z is 0.001 to 50 mole percent.

According to the present invention, the thermoplastic polymers used in the antistatic thermoplastic compositions may generally be any thermoplastic polymer known to those skilled in the art. Preferably, the thermoplastic polymer is selected from styrenics, such as high-impact polystyrenes; halogenated polymers, such as polyvinyl chlorides and polyvinylidene chlorides; polyesters, such as polyethylene terephthalates and polybutylene terephthalates; polyolefins, such as polyethylenes and polypropylenes; polycarbonates; polyamides, such as nylon; polyurethanes; ABS copolymers; SAN copolymers; polysulfones; fluoropolymers; and rubbers. It will be understood that copolymers and modified polymers of the above may also be used in the invention.

The thermoplastic polymer is present in the antistatic thermoplastic composition in an amount of 50 to 95 wt% and preferably, 70 to 90 wt%. The thermoplastic may additionally contain various additives, fillers, reinforcements, and the like in amounts which may be readily determined by one skilled in the art depending upon the particular properties desired.

Non-limiting examples of such additives include antioxidants, for example hindered phenols, such as IRGANOX®; UV stabilizers, for example hydroxyphenyl benzotriazoles, such as TINUVIN® P; mineral fillers, such as mica, talc and CaCO₃; dyes, such as NIGROSINE®; flame retardants, such as decabromodiphenyloxide; plasticizers, such as n-alkyl-p-toluene sulfonamide, commercially available as KETJENFLEX®; lubricants, such as polytetrafluoroethylene (PTFE); reinforcing aids, such as glass fibers, aramid fibers, stainless steel fibers and carbon fibers; processing aids, such as stearates; and pigments, such as TiO₂. Other additives known to those skilled in the art may also be added to the antistatic thermoplastic composition of the present invention.

The polyvinyl alcohol (PVA) copolymers useful in the present invention may be prepared in accordance with methods generally known to those skilled in the art. Preferred are copolymers of vinyl acetate and poly(alkyleneoxy)acrylate in which the acetate functionality on the vinyl acetate is then hydrolyzed to yield a vinyl alcohol copolymer. The acetate groups in the polyvinyl alcohol copolymer may be fully hydrolyzed or only partially hydrolyzed, depending on the acid used in the hydrolysis, the hydrolysis reaction time and hydrolysis reaction temperature. Stronger acids, longer reaction times and higher reaction temperatures result in a greater degree of hydrolysis.

Preferred polyvinyl alcohol copolymers useful in the present invention are set forth in formula I above and most of these are described in US-A-4,618,648; 4,675,360, and 4,708,999 of Marten and assigned to Air Products and Chemicals, Inc. Other suitable copolymers are described in US-A-4,772,663, and European Patent Application Publications EP-A-0 275 900 and 0 297 460, also assigned to Air Products and Chemicals, Inc. Commercially available polyvinyl alcohol copolymers useful in the present invention include the VINEX® line of copolymers available from Air Products and Chemicals, Inc.

In a preferred embodiment of the present invention, the antistatic thermoplastic composition comprises 10 to 30 wt% of the polyvinyl alcohol copolymer. Preferred polyvinyl alcohol copolymer are the VINEX® copolymers available commercially from Air Products and Chemicals, Inc.

In another preferred embodiment hygroscopic or water soluble inorganic or organic salts are added to the composition in an effective amount to act as synergists. Such synergist salts may include, for example, Na₂CO₃, ZnCl₂, Na₂SO₄, and Sandolec AP (a sodium sulfonate salt of polysulfone). It is believed that the salt causes moisture to be absorbed by the PVA copolymer, thus resulting in more efficient static dissipation. The amount of salt synergist added to the compositions of the present invention is preferably up to 5 wt%, and more preferably, 1 to 2 wt%. Adding greater amounts of salt to the composition may cause some physical degradation of the composition. A preferred polymer/salt synergist combination according to the present invention is polypropylene with Na₂CO₃.

The polyvinyl alcohol copolymer may be combined with the thermoplastic polymer by methods known to those of ordinary skill in the art. Examples of such techniques include mixing the polyvinyl alcohol copolymer with the thermoplastic polymer in a Banbury mixer, melt-blending, extrusion and milling. The final products (e.g., casings or housings for electronic components) may be formed from the thermoplastic compositions of the present invention, for example, by injection molding, coinjection molding, extrusion or coextrusion to films and sheets, and blow molding.

While the inventors do not wish to be bound by any particular theory, it is believed that the polyvinyl alcohol copolymers used in the invention absorb water and keep the surface of the thermoplastic wet to dissipate electrostatic charges. Moreover, since the copolymers are of relatively high molecular weight, they are generally not lost from the compositions during use and wear.

The invention will now be illustrated in more detail by reference to the following specific, non-limiting examples.

In the following examples, antistatic thermoplastic composition samples were compounded on standard processing equipment, namely a 5.08-1.27 cm (2-1/2 inch) diameter Prodex screw extruder, and subsequently injection molded to dimensions of about 0.32 cm (1/8 th inch) thick, 7.62 cm (3 inches) wide and 15.24 cm (6 inches) long. The samples were then conditioned at 25°C for 24 hours at 15% relative humidity. The following examples relate to the testing of blends of various proportions of the polyvinyl alcohol (PVA) copolymer and a thermoplastic polymer in accordance with the Federal Test Method Standard 101, Method 4046. This test involves the application of an electrical charge to a sample and measuring the time the sample takes to dissipate this charge down to zero volts. The samples were tested according to Method 4046 using a static decay meter device. This device applies about a 5,000-volt charge to the sample and then measures the decay rate. Military specification MIL-B-81705B requires that the charge decay rate from 5,000 volts to zero volts be less than 2 seconds. As is apparent from the data in Table 1, several compositions meet this criterion, i.e., the charge is dissipated even in a low humidity environment.

The PVA in all examples was VINEX® 2034 from Air Products and Chemicals, Inc. The polypropylene used in Examples 1A through 3C was maleic anhydride grade polypropylene (i.e. small amounts of maleic anhydride grafted to the polypropylene), commercially available from Himont, known as PROFAX® SB-222. Example 2 contains sodium carbonate as a salt synergist. Examples 3A through 3C contain 0.32 cm (1/8 inch) chopped glass fiber from PPG. The ABS used in Examples 4A and 4B was a resin commercially available from Dow Chemical, known as ABS-340. The polystyrene used in Examples 5A and 5B was a high-impact grade polystyrene, known as FINA® 825, available from American Petrofina, Inc.

**TABLE 1**

| **Example** | **PVA Copolymer (%)** | **Polypropylene (%)** | **Additive (%)** | **Time to Zero Volts (Seconds)** |
|---|---|---|---|---|
| 1A | 0 | 100 | - | >10 |
| 1B | 20 | 80 | - | 3.26 |
| 1C | 25 | 75 | - | 1.46 |
| 1D | 30 | 70 | - | 0.87 |
| | | | | |
| 2 | 25 | 70 | 5 (salt synergist) | 0.77 |
| 3A | 0 | 90 | 10 (glass fiber) | >10 |
| 3B | 25 | 65 | 10 (glass fiber) | 3.05 |
| 3C | 30 | 60 | 10 (glass fiber) | 2.76 |
| | | | | |

| **Example** | **PVA Copolymer (%)** | **ABS (%)** | **Time to Zero Volts (Seconds)** | |
|---|---|---|---|---|
| 4A | 0 | 100 | >10 | |
| 4B | 25 | 75 | 3.20 | |
| | | | | |

| **Example** | **PVA Copolymer (%)** | **PS (%)** | **Time to Zero Volts (Seconds)** | |
|---|---|---|---|---|
| 5A | 0 | 100 | >10 | |
| 5B | 25 | 75 | 0.48 | |

As can be seen from the above examples, the addition of PVA copolymer according to the invention increases the rate of static decay (dissipation of charge) by a factor of three or more compared to the controls (Examples 1A, 3A, 4A and 5A) which contained no PVA copolymer. The addition of a salt synergist to the compositions of the present invention appears to result in even faster dissipation of charge, as indicated by the static decay results in Example 2 as compared to other examples.

The compositions of the present invention unexpectedly maintain their compositional integrity, disperse to substantial homogeneity, and are more economical and easier to process than the compositions of the prior art. In addition, the compositions of the present invention may be colored using suitable pigments well known to those skilled in the art.

The present invention may be embodied in other specific forms without departing from the spirit or essential attributes thereof and, accordingly, reference should be made to the appended claims, rather than to the foregoing specification as indicating the scope of the invention.

## Claims

1. An antistatic thermoplastic composition comprising 5 to 50 wt% of a polyvinyl alcohol copolymer and 50 to 95 wt% of a thermoplastic polymer, wherein said copolymer is a copolymer of vinyl acetate and poly(alkyleneoxy)acrylate wherein the acetate functionality is at least partially hydrolyzed to a vinyl alcohol functionality and said thermoplastic polymer is a polymer other than said copolymer.

2. The composition according to claim 1 wherein said acetate functionality is substantially fully hydrolyzed.

3. The composition according to claim 1 wherein the polyvinyl alcohol copolymer has the formula: 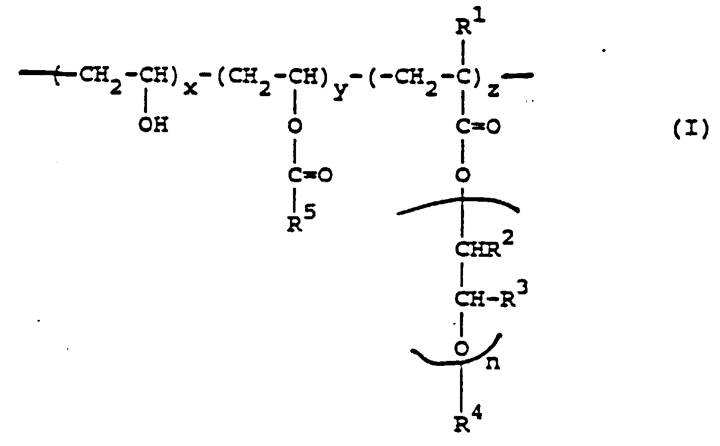 wherein
R¹ is hydrogen, methyl or ethyl;
R² and R³ are independently hydrogen, alkyl of 1 to 20 carbons, or aryl of 6 to 20 carbons;
R⁴ and R⁵ are independently hydrogen, alkyl of 1 to 20 carbons, aryl of 6 to 20 carbons, or aralkyl of 7 to 30 carbons;
n is 1 to 1000;
x is 50 to 99.9 mole percent;
y is 0 to 50 mole percent; and
z is 0.001 to 50 mole percent.

4. The composition according to claim 1 wherein the thermoplastic polymer is selected from the group consisting of styrenics, halogenated polymers, polyesters, polyolefins, polycarbonates, polyamides, polyurethanes, ABS copolymers, SAN copolymers, polysulfones, and fluoropolymers.

5. The composition according to claim 1 further comprising an additive selected from the group consisting of glass fibers, carbon fibers, aramid fibers, stainless steel fibers, mineral fibers and flame retardants.

6. The composition according to claim 1 further comprising a hygroscopic or water soluble inorganic or organic salt in an amount effective to act as an antistatic synergist for said copolymer

7. The composition according to claim 6, wherein the salt is selected from the group consisting of Na₂CO₃, ZnCl₂, Na₂SO₄ and sandolec AP (a sodium sulfonate salt of polysulfone).

8. The composition according to claim 6 wherein said polymer is polypropylene and said salt is sodium carbonate.

9. The composition according to claim 1 further comprising a pigment to color said composition.

10. The composition according to claim 1 wherein said polymer is polypropylene and the composition further comprises about 10 weight percent glass fibers as a reinforcing aid.

11. A method of improving the antistatic properties of a thermoplastic polymer comprising adding to the polymer 5 to 50 wt% of a polyvinyl alcohol copolymer, wherein said copolymer is a copolymer of vinyl acetate and poly(alkyleneoxy)acrylate wherein the acetate functionality is at least partially hydrolyzed to a vinyl alcohol functionality and said thermoplastic polymer is a polymer other than said copolymer, wherein the wt% are based on a total weight of a final mixture including said polymer and said copolymer.

12. The method according to claim 11 wherein a hygroscopic or water soluble inorganic or organic salt is added to the polymer in an amount effective to act as an antistatic synergist for said copolymer.

## Patentansprüche

1. Antistatische thermoplastische Zusammensetzung, umfassend 5 bis 50 Gew.-% eines Polyvinylalkoholcopolymers und 50 bis 95 Gew.-% eines thermoplastischen Polymers, wobei das Copolymer ein Copolymer von Vinylacetat und Poly(alkylenoxy)acrylat ist, wobei die Acetatfunktionalität mindestens teilweise zu einer Vinylalkoholfunktionalität hydrolysiert ist und das thermoplastische Polymer ein Polymer ist, das verschieden von dem Copolymer ist.

2. Zusammensetzung nach Anspruch 1, wobei die Acetatfunktionalität im wesentlichen vollständig hydrolysiert ist.

3. Zusammensetzung nach Anspruch 1, wobei das Polyvinylalkoholcopolymer die Formel 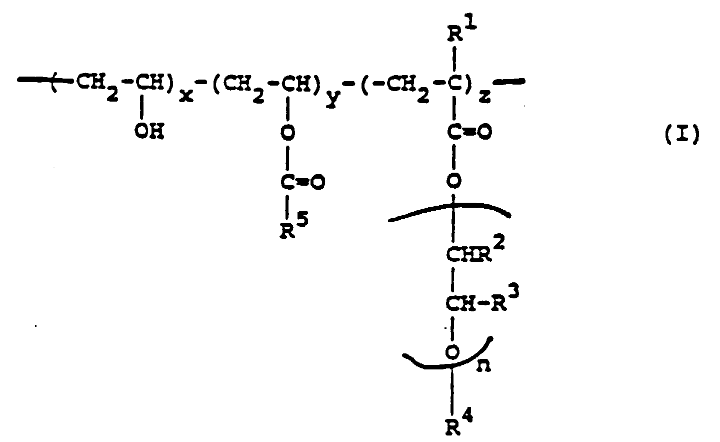 aufweist, in der R¹ ein Wasserstoffatom, eine Methyl- oder Ethylgruppe bedeutet, R² und R³ unabhängig voneinander ein Wasserstoffatom, einen Alkylrest mit 1 bis 20 Kohlenstoffatomen oder einen Arylrest mit 6 bis 20 Kohlenstoffatomen bedeuten, R⁴ und R⁵ jeweils unabhängig voneinander ein Wasserstoffatom, einen Alkylrest mit 1 bis 20 Kohlenstoffatomen, einen Arylrest mit 6 bis 20 Kohlenstoffatomen oder einen Aralkylrest mit 7 bis 30 Kohlenstoffatomen bedeuten, n 1 bis 1000 bedeutet, x 50 bis 99,9 Mol% bedeutet, y 0 bis 50 Mol% bedeutet und z 0,001 bis 50 Mol% bedeutet.

4. Zusammensetzung nach Anspruch 1, wobei das thermoplastische Polymer aus der Gruppe, die aus Styrolpolymeren, halogenierten Polymeren, Polyestern, Polyolefinen, Polycarbonaten, Polyamiden, Polyurethanen, ABS-Copolymeren, SAN-Copolymeren, Polysulfonen und Fluorpolymeren besteht, ausgewählt ist.

5. Zusammensetzung nach Anspruch 1, die weiterhin einen Zusatz umfaßt, der aus der Gruppe, die aus Glasfasern, Kohlenstoffasern, Aramidfasern, rostfreien Stahlfasern, Mineralfasern und Flammverzögerern besteht, ausgewählt ist.

6. Zusammensetzung nach Anspruch 1, die ferner ein hygroskopisches oder wasserlösliches anorganisches oder organisches Salz in einer Menge umfaßt, die wirksam ist, um als ein antistatischer Synergist für das Copolymer zu wirken.

7. Zusammensetzung nach Anspruch 6, wobei das Salz aus der Gruppe, die aus Na₂CO₃, ZnCl₂, Na₂SO₄ und Sandolec AP (ein Natriumsulfonatsalz eines Polysulfons) besteht, ausgewählt ist.

8. Zusammensetzung nach Anspruch 6, wobei das Polymer Polypropylen ist und das Salz Natriumcarbonat ist.

9. Zusammensetzung nach Anspruch 1, die ferner ein Pigment umfaßt, um die Zusammensetzung zu färben.

10. Zusammensetzung nach Anspruch 1, wobei das Polymer Polypropylen ist und die Zusammensetzung ferner etwa 10 Gew.-% Glasfasern als einen Verstärkungshilfsstoff umfaßt.

11. Verfahren zur Verbesserung der antistatischen Eigenschaften eines thermoplastischen Polymers, umfassend die Zugabe von 5 bis 50 Gew.-% eines Polyvinylalkoholcopolymers zu dem Polymer, wobei das Copolymer ein Copolymer von Vinylacetat und Poly(alkylenoxy)acrylat ist, wobei die Acetatfunktionalität mindestens teilweise zu einer Vinylalkoholfunktionalität hydrolysiert ist und das thermoplastische Polymer ein Polymer ist, das verschieden von dem Copolymer ist, wobei die Gew.-% auf das Gesamtgewicht eines Endgemisches bezogen sind, das das Polymer und das Copolymer umfaßt.

12. Verfahren nach Anspruch 11, wobei ein hygroskopisches oder wasserlösliches anorganisches oder organisches Salz in einer Menge zu dem Polymer gegeben wird, die wirksam ist, um als ein antistatischer Synergist für das Copolymer zu wirken.

## Revendications

1. Composition thermoplastique antistatique comprenant de 5 à 50 % en poids d'un copolymère d'alcool polyvinylique et de 50 à 95 % en poids d'un polymère thermoplastique, dans laquelle ledit copolymère est un copolymère d'acétate de vinyle et de poly(alkyléneoxy)acrylate dans lequel la fonctionnalité acétate est au moins partiellement hydrolysée en une fonctionnalité d'alcool vinylique et ledit polymère thermoplastique est un polymère autre que ledit copolymère.

2. Composition selon la revendication 1 dans laquelle ladite fonctionnalité acétate est substantiellement totalement hydrolysée.

3. Composition selon la revendication 1 dans laquelle le copolymère d'alcool polyvinylique répond à la formule : 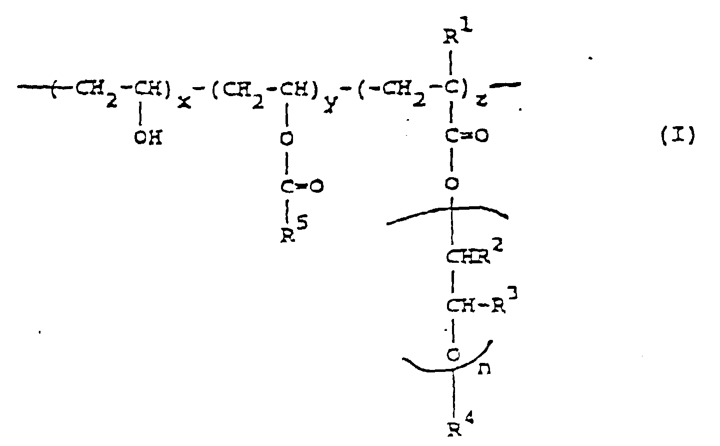 dans laquelle :
R¹ représente un atome d'hydrogène, un groupe méthyle ou un groupe éthyle ;
R² et R³ représentent indépendamment l'un de l'autre un atome d'hydrogène, un groupe alkyle comportant de 1 à 20 atomes de carbone, ou un groupe aryle comportant de 6 à 20 atomes de carbone ;
R⁴ et R⁵ représentent indépendamment l'un de l'autre un atome d'hydrogène, un groupe alkyle comportant de 1 à 20 atomes de carbone, un groupe aryle comportant de 6 à 20 atomes de carbone, ou un groupe aralkyle comportant de 7 à 30 atomes de carbone ;
n vaut de 1 à 1000 ;
x représente de 50 à 99,9 mole % ;
y représente de 0 à 50 mole % et
z représente de 0,001 à 50 mole %.

4. Composition selon la revendication 1 dans laquelle le polymère thermoplastique est choisi dans le groupe consistant en les polymères styréniques, les polymères halogénés, les polyesters, les polyoléfines, les polycarbonates, les polyamides, les polyuréthannes, les copolymères ABS, les copolymères SAN, les polysulfones, et les fluoropolymères.

5. Composition selon la revendication 1 comprenant de plus un additif choisi dans le groupe consistant en les fibres de verre, les fibres de carbone, les fibres d'aramide, les fibres d'acier inoxydable, les fibres minérales et les retardateurs de flamme.

6. Composition selon la revendication 1 comprenant de plus un sel hygroscopique ou soluble dans l'eau, inorganique ou organique, en quantité efficace pour agir en tant qu'agent de synergie antistatique pour ledit copolymère.

7. Composition selon la revendication 6, dans laquelle le sel est choisi dans le groupe consistant en Na₂CO₃, ZnCl₂, Na₂SO₄ et Sandolec AP (un sel sulfonate de sodium de polysulfone).

8. Composition selon la revendication 6, dans laquelle ledit polymère est le polypropylène et ledit sel est le carbonate de sodium.

9. Composition selon la revendication 1 comprenant de plus un pigment pour colorer ladite composition.

10. Composition selon la revendication 1 dans laquelle ledit polymère est le polypropylène et la composition comprend de plus environ 10 % en poids de fibres de verre en tant qu'adjuvant de renfort.

11. Procédé pour améliorer les propriétés antistatiques d'un polymère thermoplastique, comprenant l'addition au polymère de 5 à 50 % en poids d'un copolymère d'alcool polyvinylique, ledit copolymère consistant en un copolymère d'acétate de vinyle et de poly(alkylèneoxy)acrylate dans lequel la fonctionnalité acétate est au moins partiellement hydrolysée en une fonctionnalité d'alcool vinylique, et ledit polymère thermoplastique consistant en un polymère autre que ledit copolymère, les % en poids étant rapportés au poids total d'un mélange final comprenant ledit polymère et ledit copolymère.

12. Procédé selon la revendication il dans lequel un sel hygroscopique ou soluble dans l'eau, inorganique ou organique, est ajouté au polymère en quantité efficace pour agir en tant qu'agent de synergie antistatique pour ledit copolymère.
